# EUROPEAN PATENT SPECIFICATION

(11) **EP 1 695 629 B1**
(45) Date of publication and mention of the grant of the patent: **17.08.2011**
(21) Application number: 04787842.6
(22) Date of filing: 10.09.2004
(51) Int. Cl.: A23F 3/14, A23L 2/00

(54) **BOTTLED BEVERAGE**
FLASCHENGETRÄNK
BOISSON EN BOUTEILLE

(30) Priority: 18.12.2003 JP 2003420908
(43) Date of publication of application: 30.08.2006
(73) Proprietor: KAO CORPORATION, Tokyo 103-8210 (JP)
(72) Inventor: IWASAKI, Masaki, C/O KAO CORP. RESEARCH LABS, Sumida-ku Tokyo 1318501 (JP); HOSOYA,Naoki, C/O KAO CORP. RESEARCH LABS, Sumida-ku Tokyo 1318501 (JP); YAMAMOTO, Shinji, C/O KAO CORP. RESEARCH LABS, Sumida-ku Tokyo 1318501 (JP); TAKASHIMA, Shinichirou C/O KAO CORP. RESEARCH LABS, Sumida-ku Tokyo 1318501 (JP); HOSHINO, Eiichi, C/O KAO CORP. RESEARCH LABS, Sumida-ku Tokyo 1318501 (JP)
(74) Representative: HOFFMANN EITLE
(86) International application number: PCT/JP2004/013201
(87) International publication number: WO 2005/060761

(56) References cited:
- WO-A-02/39822
- WO-A-02/065846
- WO-A-2005/006871
- JP-A- 6 142 405
- JP-A- 10 501 407
- JP-A- 2003 169 603
- JP-A- 2003 169 641
- JP-A- 2003 259 806
- US-A- 4 946 701

## Description

### Field of the Invention

This invention relates to packaged beverages, each of which ismixedwith a green tea extract, contains catechins at high concentration, is good in taste, and is also excellent in color tone stability when stored at high temperatures in a clear container.

### Background of the Invention

As effects of catechins, there have been reported a suppressing effect on the increase of cholesterol and an inhibitory effect on α-amylase activity (see, for example, Patent Documents 1 and 2). For such physiological effects to manifest, it is necessary for an adult to drink tea as much as 4 to 5 cups a day. Accordingly, there has been a demand for a technological method by which catechins can be mixed in beverages at high concentration in order to facilitate the ingestion of a large amount of catechins. As one of methods for this, catechins are added in a dissolved form to a beverage by using a concentrate of a green tea concentrate (see, for example, Patent Documents 3 to 5).

When a commercial concentrate of green tea extract is used as is, however, the resulting beverage has strong astringency and bitterness under the influence of the components contained in the concentrate of green tea extract and gives a poor feeling when it is swallowed, so that it is not suited for long-term drinking which is required to develop the physiological effects of catechins. As a method for reducing astringency which is one of elements that make the beverage unsuited for long-term drinking, on the other hand, there is a method that mixes dextrin. Sole reliance on this method is, however, not sufficient when catechins are mixed at high concentration. Further, it is not preferred to use a commercial concentrate of green tea extract as is even in a beverage system with a sweetener, because the resulting beverage is strong in astringency and bitterness, has an unnecessary flavor and taste derived from green tea, varies in bitterness and astringency especially when stored at high temperatures, is not good in the stability of bitterness and stringency, and therefore, is not suited for long-term drinking (for example, Patent Document 6). Moreover, compared with a green tea extract or a beverage with a green tea extract mixed therein, a beverage with a green tea extract and a saccharide mixed therein is prone to changes in external appearance when stored at high temperatures and, when filled in a clear container, its color tone does not remain stable over a long term.
Patent Document 1: JP-A-60-156614
Patent Document 2: JP-A-03-133928
Patent Document 3: JP-A-2002-142677
Patent Document 4: JP-A-8-298930
Patent Document 5: JP-A-8-109178
Patent Document 6: JP-A-10-501407 and WO 95/33385
In the patent applications EP 1 297 757 A1 and JP 2003/169641 A packaged beverages comprise non-polymer catechins and additionally additives such as sweeteners and inorganic salts may be contained. According to patent application WO 02/39822 A2, non-epi-catechins and epi-catechins are used in a packaged beverage which optionally contains cyclodextrins. Soluble polymers are comprised in a non-epi-catechin and epi-catechin comprising beverage as claimed in patent application WO 02/0658462 A1. In patent US 4,946,701 catechines, flavorants and water are used as essential ingredients for a beverage which optionally can contain sweetener. Additionally to green tea catechins and mineral cations, polysaccharides can be present in ready-to-drink beverages (WO 2005/006871 A1). This patent application is state of the art under Art. 54(3) EPC for the present application.

The present invention provides a packaged beverage with a green tea extract mixed therein, containing the following ingredients (A) and (B):
(A) from 0.01 to 1.0 wt% of non-polymer catechins, and
(B) from 0.0001 to 8 wt%, in terms of equivalent glucose amount, and less than 0.05 wt%, in terms of equivalent fructose amount, of a carbohydrate,
from 0.001 to 0.5 wt% of sodium ions and from 0.001 to 0.2 wt% of potassium ions,
wherein the beverage has a pH of from 2 to 6.

### Embodiments of the Invention

An object of the present invention is to provide a packaged beverage, which contains catechins at high concentration, is reduced in bitterness and astringency and is suited for long-term drinking despite even when a green tea extract is used, is excellent in the stability of bitterness and astringency and also in the feeling when it is swallowed, hardly changes in its external appearance when stored at high temperatures, and remains stable in its color tone even when filled in a clear container and stored over a long term.

The present inventors have investigated to solve the above-described problem by adjusting the composition of a packed beverage with a green tea extract mixed therein and having high catechin concentration. As a result, it has been found that a beverage of high catechin concentration - which is free of the flavor and taste of green tea or any other foreign taste or foreign flavor and is suited for long-term drinking, is excellent in the stability of bitterness and astringency and its feeling when it is swallowed, and remains stable in color tone over a long term even when filled and stored in a clear container over a long term - can be obtained when a carbohydrate is mixed as a sweeter ingredient such that an equivalent glucose amount and an equivalent fructose amount fall within predetermined value ranges, i.e., an equivalent fructose amount becomes less than 0.05 w% and the pH is adjusted to a range of from 2 to 6.

The packaged beverage according to the present invention contains non-polymer catechins at high concentration, is reduced in bitterness and astringency and is suited for long-term drinking, is excellent in the stability of bitterness and astringency and its feeling as it passes down the throat, remains stable in color tone over a long term even when filled in a clear container and stored at high temperatures, and is useful, for example, as a non-tea-based, packaged beverage.

The term "non-polymer catechins (A)" as used herein is a generic term, which collectively encompasses non-epicatechins such as catechin, gallocatechin, catechingallate and gallocatechingallate, and epicatechins such as epicatechin, epigallocatechin, epicatechingallate and epigallocatechingallate, and indicates not only non-polymer catechins but also non-oxide catechins.

The packaged beverage according to the present invention contains catechins (A), each of which is a non-polymer and non-oxide and is dissolved in water, at a content of from 0.01 to 1.0 wt%, preferably from 0.03 to 0.5 wt%, more preferably from 0.04 to 0.4 wt%, still more preferably from 0.05 to 0.3 wt%, yet more preferably from 0.06 to 0.3 wt%, even more preferably from 0.092 to 0.26 wt%, still even more preferably from 0.1 to 0.15wt%. Insofar as the content of non-polymer catechins falls within the above-described range, a great deal of non-polymer catechins can be taken with ease, and from the standpoint of the color tone of the beverage shortly after its preparation, this content range is also preferred. The concentration of the non-polymer catechins can be controlled by relying upon the amount of a green tea extract to be mixed.
Further, the daily intake of green tea required for an adult to exhibit the effects of the promotion of accumulated fat burning, the promotion of dietary fat burning and the promotion of β-oxidation gene expression in the liver is considered to be preferably 300 mg ormore, more preferably 450 mg or more, still more preferably 500 mg or more in terms of non-polymer catechins. Specifically, it has been confirmed that an anti-puffiness effect and/or visceral fat reducing effect can be brought about by ingesting a beverage, which contains 483 mg, 555 mg or 900 mg of non-polymer catechins per package (JP-A-2002-326932).
Therefore, the daily intake of the packaged beverage according to the present invention by an adult can also be preferably 300 mg or more, more preferably 450 mg or more, still more preferably 500 mg or more in terms of non-polymer catechins. From the standpoint of assuring to meet the minimum daily intake requirement, the non-polymer catechins can be mixed in an amount of preferably 300 mg or more, more preferably 450 mg or more, still more preferably 500 mg or more in each package (350 to 500 mL) of the packaged beverage according to the present invention.

In the packaged beverage according to the present invention, the carbohydrate (B) is incorporated to lessen the bitterness and astringency of the non-polymer catechins. The content of the carbohydrate is from 0.0001 to 8 wt% in terms of equivalent glucose amount and less than 0.05 wt% in terms of equivalent fructose amount, preferably from 0.001 to 8 wt% in terms of equivalent glucose amount and less than 0.05 wt% in terms of equivalent fructose amount. Insofar as the equivalent glucose amount and equivalent fructose amount fall within these ranges, no strong bitterness, astringency or puckeriness is produced and bitterness and astringency are lessened, so that the packaged beverage is suited for long-term drinking and is excellent in the stability of bitterness and astringency and also in the feeling when it is swallowed. In particular, an equivalent fructose amount of 0.05 wt% or higher in a catechin-containing beverage leads to substantial changes in taste and flavor when the temperature of the catechin-containing beverage varies. Further, an equivalent glucose amount more than 20 wt% leads to a deterioration in the stability of color tone.

The soluble carbohydrate used in the beverage according to the present invention plays a role not only as a sweetener but also as an energy source. As a standard upon selecting a carbohydrate, it is important to take into consideration a sufficient gastric emptying rate and intestinal absorption rate. The carbohydrate can be a mixture of glucose and fructose, or a carbohydrate hydrolyzable into glucose and fructose or capable of forming glucose and fructose in the digestive tract. The term "carbohydrate" as used herein include monosaccharides, disaccharides, oligosaccharides, conjugated polysaccharides, and mixtures thereof. Monosaccharides include tetroses, pentoses, hexoses, and ketohexoses. Examples of hexoses are aldohexoses such as glucose known as grape sugar. The amount of glucose contained in the packaged beverage according to the present invention is from 0.0001 to 8 wt%, preferably from 0.001 to 8 wt% Fructose which is also known as "fruit sugar" is a ketohexose. The amount of fructose contained in the packaged beverage according to the present invention is less than 0.05 wt%, preferably less than 0.04 wt%, more preferably less than about 0.035 wt%.

The beverage according to the present invention may contain the above-described two kinds of sugars and/or a carbohydrate which forms these sugars in the body (i.e., sucrose, maltodextrin, corn syrup, or fructose-rich corn syrup). Among carbohydrates, an important type consists of disaccharides. An illustrative disaccharide is sucrose which is also known as "cane sugar" or "beet sugar". As the amount of sucrose in the packaged beverage according to the present invention, it is necessary to mix sucrose such that the equivalent glucose amount becomes from 0.0001 to 8 wt% and the equivalent fructose amount becomes less than 0.05 wt%.

As a conjugated hydrocarbon usable in the present invention, maltodextrin can be mentioned. The total amount of one or more carbohydrates in the packaged beverage according to the present invention is from 0. 0001 to 8 wt%. Included in the total amount of carbohydrates are not only those naturally existing in a fruit juice or tea extract but also mixed carbohydrate or carbohydrates. Carbohydrate derivatives, polyhydric alcohols, for example, glycerols, and artificial sweeteners can each be used in the present invention to provide a sweetness source such that the sweetness source is readily absorbed and is distributed throughout the body. However, the existence of glycerol is not essential in obtaining the advantages of the present invention. It is possible to use from 0.1 to 15 wt%, preferably from 6 to 10 wt% of glycerol in the packaged beverage according to the present invention as needed.

An artificial sweetener may be mixed in the packaged beverage according to the present invention. The artificial sweetener may be contained preferably at from 0.0001 to 20 wt%, more preferably at from 0.001 to 15 wt%, still more preferably at from 0. 001 to 10 wt% . An excessively low content provides substantially no sweetness, and cannot achieve a balance with sour and salty tastes. An unduly high content, on the other hand, results in excessive sweetness, so that a feeling of being caught in the throat is strong to reduce the feeling as the beverage is swallowed. Examples of such sweeteners include high-sweetness sweeteners such as aspartame, saccharin, cyclamate, acesulfame-K,L-aspartyl-L-phenylalanine lower alkyl ester sweetener, L-aspartyl-D-alanine amide, L-aspartyl-D-serine amide, L-aspartyl-hydroxymethylalkanamide sweetener, L-aspartyl-1-hydroxyethylalkanamide sweetener, sucralose and thaumatin, sugar alcohols such as erythritol, xylitol and trehalose, glycyrrhizin, and synthetic alkoxyaromatic compounds. Stevioside and other natural-source sweeteners are also usable.
As a combination of sweeteners, a single system of artificial sweetener or a combination of an artificial sweetener and a glucose system is more preferred. With a system containing 0.05 wt% or more of fructose, the beverage undesirably gives a strong residual feeling of such astringency as sticking on the tongue when stored at high temperatures.

The packaged beverage according to the present invention contains, in addition to the above-described ingredients, from 0.001 to 0.5 wt% of sodium ions and from 0. 001 to 0.2 wt% of potassium ions. Beverages of the present invention with such minerals incorporated therein are useful in the form of drinks such as sports drinks and isotonic drinks. The term "sports drink" is generally defined to mean a drink that can promptly replenish water and minerals lost in the form of sweat during physical exercise.

Sodium and potassium can be mentioned as primary physiological electrolytes. These electrolytes and ion ingredients can be mixed as their corresponding water-soluble or inorganic salts. They are also found in fruit extracts and tea extracts. The amount of an electrolyte or ion ingredient in the beverage according to the present invention is based on the final packaged beverage ready for drinking unless otherwise specifically indicated. The concentration of each electrolyte means an ion concentration, and does not mean a salt concentration. Some of low-solubility salts shouldbe dissolved inwater or water having an acidic pH. A potassium ion ingredient can be mixed as potassium chloride, potassium carbonate, potassium sulfate, potassium acetate, potassium hydrogencarbonate, potassium citrate, potassium phosphate, potassium hydrogenphosphate, potassium tartrate, potassium sorbate or a mixture thereof or as a component of a fruit extract or tea. In the beverage according to the present invention, potassium ions are contained at from 0.001 to 0.2 wt%, more preferably at from 0.002 to 0.15 wt%, still more preferably from 0.003 to 0.12 wt%. Similarly, a sodium ion ingredient can also be mixed as a readily-available sodium salt such as sodium chloride, sodium carbonate, sodium hydrogencarbonate, sodium citrate, sodium phosphate, sodium hydrogenphosphate, sodium tartrate, sodium benzoate or a mixture thereof or as a component of a fruit extract or tea. A lower sodium ion concentration is desired from the standpoint of facilitating the absorption of water under osmotic pressure. It is, however, important in the present invention that the sodium ion concentration be controlled to such a level as avoiding the absorption of water into the intestine from the body under osmotic pressure. The sodium ion concentration required to achieve such a level can preferably be lower than the plasma sodium ion concentration. In the beverage according to the present invention, sodium ions are contained at from 0.001 to 0.5 wt%, more preferably from 0.002 to 0.4 wt%, still more preferably from 0.003 to 0.2 wt%. In addition to potassium ions and sodium ions, preferably from 0.001 to 0.5 wt%, more preferably from 0.002 to 0.4 wt%, still more preferably from 0.003 to 0.3 wt% of chloride ions can also be incorporated in the beverage according to the present invention. A chloride ion ingredient can be provided as a salt such as sodium chloride or potassium chloride. Further, trace ions such as calcium, magnesium, zinc and/or iron ions can also be mixed. These ions can also be mixed in the form of salt or salts. The total amount of existing ions includes not only an added amount of ions but also an amount of ions naturally existing in the beverage. When sodium chloride is added, for example, sodium ions and chloride ions in the thus-added sodium chloride are included in the total amounts of the respective ions. Depending upon the situation of drinking, excessively low concentrations of sodium ions and potassium ions may be unable to provide a fulfilled feeling in taste and to achieve an effective replenishment of minerals, and therefore, may not be preferred. Unduly high concentrations of sodium ions and potassium ions, on the other hand, lead to stronger tastes of the salts themselves and are not preferred for long-term drinking.

In the packaged beverage according to the present invention, the content weight ratio of oxalic acid or a salt thereof (C) to the non-polymer catechins (A), [(C)/(A)], may be preferably 0.2 or smaller, more preferably 0.1 or smaller, still more preferably 0.09 or smaller, yet more preferably 0.07 or smaller, even more preferably 0.06 or smaller, still even more preferably 0.05 or smaller, yet still even more preferably 0.03 or smaller. Oxalic acid or a salt thereof is a component which is found in a green tea extract. Neither oxalic acid nor a salt thereof is, however, contained if the purification degree of the green tea extract is high.
As oxalic acid may cause precipitation through its interaction with tea-derived ingredients and other mixed ingredients contained in the beverage, oxalic acid may be contained preferably at a content weight ratio of 0.2 or smaller relative to the non-polymer catechins (A). A [(C) / (A)] in this range hardly causes precipitation in the packaged beverage according to the present invention, and therefore, is preferred from the standpoint of the external appearance of the product. The oxalic acid or salt thereof (C) in the present invention includes oxalic acid or salts, which exist naturally in a green tea extract, a flavoring, a fruit extract and other ingredients, and also oxalic acid or a salt thereof newly added.

The pH of the packaged beverage according to the present invention is from 2 to 6, preferably from 2 to 5, more preferably from 2 to 4.5. A pH lower than 2 provides the beverage with a strong sour taste and pungent smell, so that the beverage is not suited for drinking. ApH higher than 6, on the other hand, makes it impossible to provide a balanced flavor and taste, leading to a deterioration in taste. Moreover, such an excessively high pH is not preferred from the standpoint of the stability of color tone.

The packaged beverage according to the present invention can be produced by adjusting the composition of a green tea extract and mixing other necessary ingredients. The green tea extract used as a raw material can preferably be one obtained by adjusting a concentrate of green tea extract, said concentrate containing from 20 to 90 wt% of non-polymer catechins based on its solid content, such that the content weight ratio [(C)/ (A)] of oxalic acid or a salt thereof (A) to the non-polymer catechins (A) becomes 0.2 or smaller. The "green tea extract" as used herein can be obtained by further purifying a concentrate of an extract of tea leaves in hot water or a water-soluble organic solvent or directly purifying the extract such that the content ratio of oxalic acid or salt thereof (C) to non-polymer catechins (A) is controlled. Further, the green tea extract can also be one obtained by treating tea leaves or a preparation under a supercritical fluid, or one obtained by having catechins adsorbed on an adsorbent, desorbing them with an aqueous solution of ethanol and then purifying them. A commercially-available concentrate of green tea extract, such as "POLYPHENON" (Mitsui Norin Co., Ltd.), "TEAFURAN" (ITO EN, LTD.) or "SUNPHENON" (Taiyo Kagaku Co., Ltd.), can also be used. A green tea extract in which the content ratio of oxalic acid or a salt thereof to non-polymer catechins does not fall within the range in the present invention can be converted into a green tea extract suited for the object of the present invention by adjusting these components.

As a purification method of a concentrate of green tea extract, the concentrate of green tea can be purified, for example, by suspending the concentrate of green tea extract in water or a mixture of water and an organic solvent, adding an organic solvent to the resultant suspension, removing the resulting precipitate, and then, distilling off the solvent; or by dissolving the concentrate of green tea extract in an organic solvent, adding water or a mixture of water and an organic solvent to the resultant solution, removing the resulting precipitate, and then, distilling off the solvent. It is possible to use one obtained by dissolving a concentrate of green tea extract, said concentrate containing from 25 to 90 wt% of non-polymer catechins based on a solid content, in a 9/1 to 1/9 mixed solution of an organic solvent and water and then to bringing the resulting solution into contact with activated carbon and acid clay or activated clay. In addition to those mentioned above, it is also possible to use one obtained by purification through supercritical extraction or one obtained by having the concentrate of green tea extract adsorbed on an adsorbent resin and eluting it with an ethanol solution.

As the form of the "green tea extract" as used herein, various forms can be mentioned such as a solid, aqueous solution and slurry. For a shorter history of being dried the form of an aqueous solution or slurry is preferred.

As described above, the content weight ratio [(C)/(A)] of oxalic acid or a salt thereof (C) to non-polymer catechins (A) in the green tea extract for use in the present invention may be preferably 0.2 or smaller, more preferably 0.1 or smaller, still more preferably 0.09 or smaller, yet more preferably 0.07 or smaller, even more preferably 0.06 or smaller, still even more preferably 0.05 or smaller, yet still even more preferably 0.03 or smaller. An unduly low ratio of non-polymer catechins to oxalic acid or a salt thereof in the green tea extract leads to abundant inclusion of ingredients other than the non-polymer catechins in a beverage, impairs the inherent external appearance of the beverage, and is not preferred. An excessively high ratio of non-polymer catechins to oxalic acid or a salt thereof in the green tea extract, on the other hand, results in the elimination of a bitterness suppressors and the like, which have been derived from tea leaves, at the same time as the removal of oxalic acid or the salt thereof, and is not preferred from the standpoint of a balanced flavor and taste.

The concentration of non-polymer catechins in the green tea extract for use in the present invention can be preferably from 20 to 90 wt%, more preferably from 20 to 87 wt%, still more preferably from 23 to 85 wt%, even more preferably from 25 to 82 wt%. If the concentration of non-polymer catechins in a green tea extract is too low, a purified product itself of a green tea extract should be mixed at a higher concentration to a beverage. If the concentrationof non-polymer catechins in a green tea extract is too high, on the other hand, there is a tendency that trace components other than total polyphenols - which are represented by free amino acids, exist in the green tea extract and serve to improve the flavor and taste - are excluded.

In the non-polymer catechins in the green tea extract for use in the present invention, the ratio of the gallocatechins, which is a generic term and consists of epigallocatechingallate, gallocatechingallate, epigallocatechin and gallocatechin, to the non-gallocatechins, which is a generic term and consists of epicatechingallate, catechingallate, epicatechins and catechins, may preferably retain their ratio in natural green tea leaves. Accordingly, the purification should be conducted under such conditions that the total content of the above-described four gallocatechins continuously exceeds the total content of the above-described four non-gallocatechins.

The percentage of gallates, which is a generic term and consists of catechingallate, epicatechingallate, gallocatechingallate andepigallocatechingallate,based on all non-polymer catechins in the green tea extract for use in the present invention can preferably be from 35 to 100 wt% from the standpoint of the effectiveness of physiological effects of the non-polymer catechins. From the standpoint of the readiness in adjusting the taste, the percentage of gallates may be more preferably from 35 to 98 wt%, still more preferably from 35 to 95 wt%.

The mixing of a bitterness suppressor to the packaged beverage according to the present invention facilitates its drinking and therefore, is preferred. The bitterness suppressor to be used can preferably be, but is not particularly limited to, a cyclodextrin. As the cyclodextrin, an α-, β- or γ-cyclodextrin or a branched α-, β- or γ-cyclodextrin can be used. In the beverage, a cyclodextrin may be contained at a concentration of from 0.005 to 0.5 wt%, preferably from 0.01 to 0.3 wt%. In the packaged beverage according to the present invention, it is possible to mix either singly or in combination, as an ingredient or ingredients which can be added from the standpoint of formulation together with ingredients derived from tea, additives such as antioxidants, flavorings, various esters, organic acids, organic acid salts, inorganic acids, inorganic acid salts, inorganic salts, colorants, emulsifiers, preservatives, seasoning agents, sweeteners, sour seasonings, gums, emulsifiers, oils, vitamins, amino acids, fruit extracts, vegetable extracts, flower honey extracts, pH regulators and quality stabilizers.

A flavoring and/or a fruit extract can be mixed in the beverage according to the present invention to make an improvement in taste. In general, fruit extract is called "fruit juice", while flavoring is called "flavor". Natural or synthetic flavorings and fruit extracts can be used in the present invention. They can be selected from fruit juices, fruit flavors, plant flavors, or mixtures thereof. In particular, a combination of a tea flavor, preferably a green tea or black tea flavor in combination with a fruit juice has a preferred taste. Preferred fruit extracts include juices of apple, pear, lemon, lime, mandarin, grapefruit, cranberry, orange, strawberry, grape, kiwi, pineapple, passion fruit, mango, guava, raspberry and cherry. More preferred are citrus juices, with grapefruit, orange, lemon, lime and mandarin juices, mango juice, passion fruit juice and guava juice, and mixtures thereof being even more preferred. Preferred natural flavors are jasmine, chamomile, rose, peppermint, Crataegus cuneata, chrysanthemum, water caltrop, sugar cane, bracket fungus of the genus Formes (Formes japonicus), bamboo shoot, and the like. A fruit juice can exist as a base, to which flavanol and other ingredients are added, or is used as a flavoring or fruit extract. The concentration of a fruit extract in the beverage according to the present invention may be preferably from 0.001 to 20 wt%, more preferably from 0. 002 to 10 wt%. One or more of fruit flavors, plant flavors, tea flavors or mixtures thereof can be used as a fruit extract. Particularly preferred flavorings are citrus flavors including orange flavor, lemon flavor, lime flavor and grape fruit flavor. In addition to such citrus flavors, various other fruit flavors such as apple flavor, grape flavor, raspberry flavor, cranberry flavor, cherry flavor, pineapple flavor and the like can be used. These flavors may be derived from natural sources such as fruit juices and balms, or may be synthesized. The term "flavoring" as used herein can also include blends of various flavors, for example, a blend of lemon and lime flavors and blends of citrus flavors and selected spices (typically, flavors for cola and other soft drinks). Such a flavoring may be containedpreferably at from 0.0001 to 5 wt%, more preferably at from 0.001 to 3 wt% in the beverage according to the present invention. Flavorings, fruit extracts, emulsified flavorings are mixed such that an equivalent glucose amount becomes from 0. 0001 to 8 wt% and an equivalent fructose amount becomes less than 0.05 wt%.

A sour seasoning can also be mixed in the beverage according to the present invention. As the sour seasoning, an edible acid such as malic acid, citric acid, tartaric acid or fumaric acid can be mentioned. The sour seasoning can be used in such an amount as controlling the pH of the beverage to 2 to 6. Organic and inorganic edible acids may also be used to adjust the pH of the beverage. Acids can exist either in non-dissociated forms or in the form of their salts, for example, such as potassium and sodium phosphates, or potassium and sodium dihydrogenphosphates. Preferred acids are edible organic acids and inorganic acids including citric acid, malic acid, fumaric acid, adipic acid, gluconic acid, tartaric acid, ascorbic acid, acetic acid, phosphoric acid, andmixtures thereof. More preferred acids are citric acid and malic acid. These sour seasonings are also useful as antioxidants which stabilize beverage ingredients.
Examples of commonly-employed antioxidants include, but are not limited to, ascorbic acid, EDTA
(ethylenediaminetetraacetic acid) and salts thereof, and plant extracts.

In the present invention, one or more vitamins can be incorporated. Preferably, vitamin A, vitamin C and vitamin E can be mentioned. Other vitamins such as vitamin D and vitamin B may also be added. One or more minerals can also be mixed in the beverage according to the present invention. Preferred minerals include calcium, chromium, copper, fluorine, iodine, iron, magnesium, manganese, phosphorus, selenium, silicon, molybdenum, and zinc. More preferred minerals are magnesium, phosphorus, and iron.

Preferred as the beverage in the packaged beverage according to the present invention is a non-tea-based beverage, for example, a non-tea-based beverage obtained by adding to a green tea extract one or more ingredients selected from carbohydrates, sodium ions and/or potassium ions, sweeteners, bitterness suppressors, flavorings, fruit extracts, vegetable extracts, sour seasonings, vitamins, minerals, carbon dioxide,
Non-tea-based, packaged beverages include, for example, carbonatedbeverages as soft drinks, beverages with fruitextracts, juices with vegetable extracts, near waters, sport drinks, diet drinks,

As in general beverages, a package useful with the packaged beverage according to the present invention can be provided in a conventional form such as a molded package made of polyethylene terephthalate as a principal component (a so-called PET bottle), a metal can, a paper container combined with metal foils or plastic films, a bottle or the like. The term "packaged beverage" as used herein means a beverage that can be taken without dilution.

The packaged beverage according to the present invention can be produced, for example, by filling the beverage in a package such as a metal can and, when heat sterilization is feasible, conducting heat sterilization under sterilization conditions as prescribed in the Food Sanitation Act. For those which cannot be subjected to retort sterilization like PET bottles or paper packages, a process is adopted such that the beverage is sterilized beforehand at a high temperature for a short time under similar sterilization conditions as those described above, for example, by a plate-type heat exchanger or the like, is cooled to a particular temperature, and is then filled in a package. Under aseptic conditions, additional ingredients may be mixed to and filled in a beverage-filled package. It is also possible to conduct an operation such that subsequent to heat sterilization under acidic conditions, the pH is caused to rise back to neutral under aseptic conditions or that subsequent to heat sterilization under neutral conditions, the pH is caused to drop back to the acidic side under aseptic conditions.

### Examples

### Quantitation of catechins

A high-performance liquid chromatograph (model: "SCL-10AVP") manufactured by Shimadzu Corporation was used. The chromatograph was fitted with an octadecyl-introduced, packed LC column, "L-Column, TM ODS" (4.6 mm x 250 mm; product of Chemicals Evaluation and Research Institute, Japan). A packaged beverage, which had been filtered through a filter (0. 8 µm) and then diluted with distilled Water, was subj ected to chromatography at a column temperature of 35°C by gradient elution. A 0.1 mol/L solution of acetic acid in distilled water and a 0.1 mol/L solution of acetic acid in acetonitrile were used as mobile phase solution A and mobile phase solution B, respectively. A measurement was conducted under the conditions of 20 µL injected sample quantity and 280 nm UV detector wavelength.

### Quantitation of oxalic acid

An ion chromatograph (model: DXAQ1110, manufactured by Japan Dionex Co., Ltd.) was fitted with a column, "IonPac AS4A-SC" (4 x 250 mm) and was connected to a suppressor, "ASRS-ULTRA" (manufactured by Dionex Corporation). Quantitation of oxalic acid was performed in the recycle mode. As mobile phases, 1.8 mmol/L Na₂CO₃ and 1.7 mmol/L NaHCO₃ were fed at 1.0 mL/min. The injected sample quantity was set at 25 µL. An electrical conductivity detector was used as a detector.

### Determination of equivalent glucose amount and equivalent fructose amount

Free fructose, glucose and sucrose were quantitated by the below-described method (1), and post-hydrolysis fructose and glucose were quantitatedby the below-described method (2). From those quantitation values, an equivalent glucose amount and equivalent fructose amount were determined.

### (1) The Japan Food Research Laboratories method relying upon HPLC (free fructose, glucose and sucrose)

Each sample was collected, to which water was added, followed by neutralization and removal of interfering substances. The thus-prepared solution was filtered through a membrane filter (pore diameter: 0.45 µm) to provide a test solution. The test solution was measured by HPLC under the following conditions.

### <Conditions for high-performance liquid chromatography>

- Model:: "LC-10ADvp" (Shimadzu Corporation)
- Detector:: Differential refractometer, "RID-10A" (Shimadzu Corporation)
- Column:: "Wakosil 5NH₂" (4.6 mm in diameter x 250 mm, Wako Pure Chemical Industries, Ltd.)

### (2) The Japan Food Research Laboratories method relying upon HPLC (fructose and glucose after their hydrolyses)

Each sample was collected, hydrolyzed with hydrochloric acid, cooled, filtered (No. 5B), and then filtered through a membrane filter (pore diameter: 0.45 µm) to provide a test solution. The test solution was measured by HPLC under the following conditions.

### <Conditions for high-performance liquid chromatography>

- Model:: "LC-10ADvp" (Shimadzu Corporation)
- Detector:: Spectrofluorometer, "RF-10AXL" (Shimadzu Corporation)
- Column:: "TSKgel SUGAR AXI" (4.6 mm in diameter x 150 mm, TOSOH CORPORATION)

### Quantitation of sodium ions

### Atomic fluorescence spectroscopy (extraction with hydrochloric acid)

Each sample (5 g) was placed in 10% hydrochloric acid (to provide a 1% HCl solution when dissolved to a predetermined volume). With deionized water, the resulting solution was then brought to the predetermined volume, and its absorbance was measured.
Wavelength: 589.6 nm
Flame: acetylene-air

### Quantitation of potassium ions

### Atomic fluorescence spectroscopy (extraction with hydrochloric acid)

Each sample (5 g) was placed in 10% hydrochloric acid (to provide a 1% HCl solution when dissolved to a predetermined volume). With deionized water,the resulting solution was then brought to the predetermined volume, and its absorbance was measured.

### Examples 1-4 & Comparative Examples 1-4

Packaged beverages were each produced by mixing the corresponding ingredients shown in Table 1 and then conducting predetermined post-treatment.

In Table 1, "ND" indicates that the corresponding ingredient was not detected.

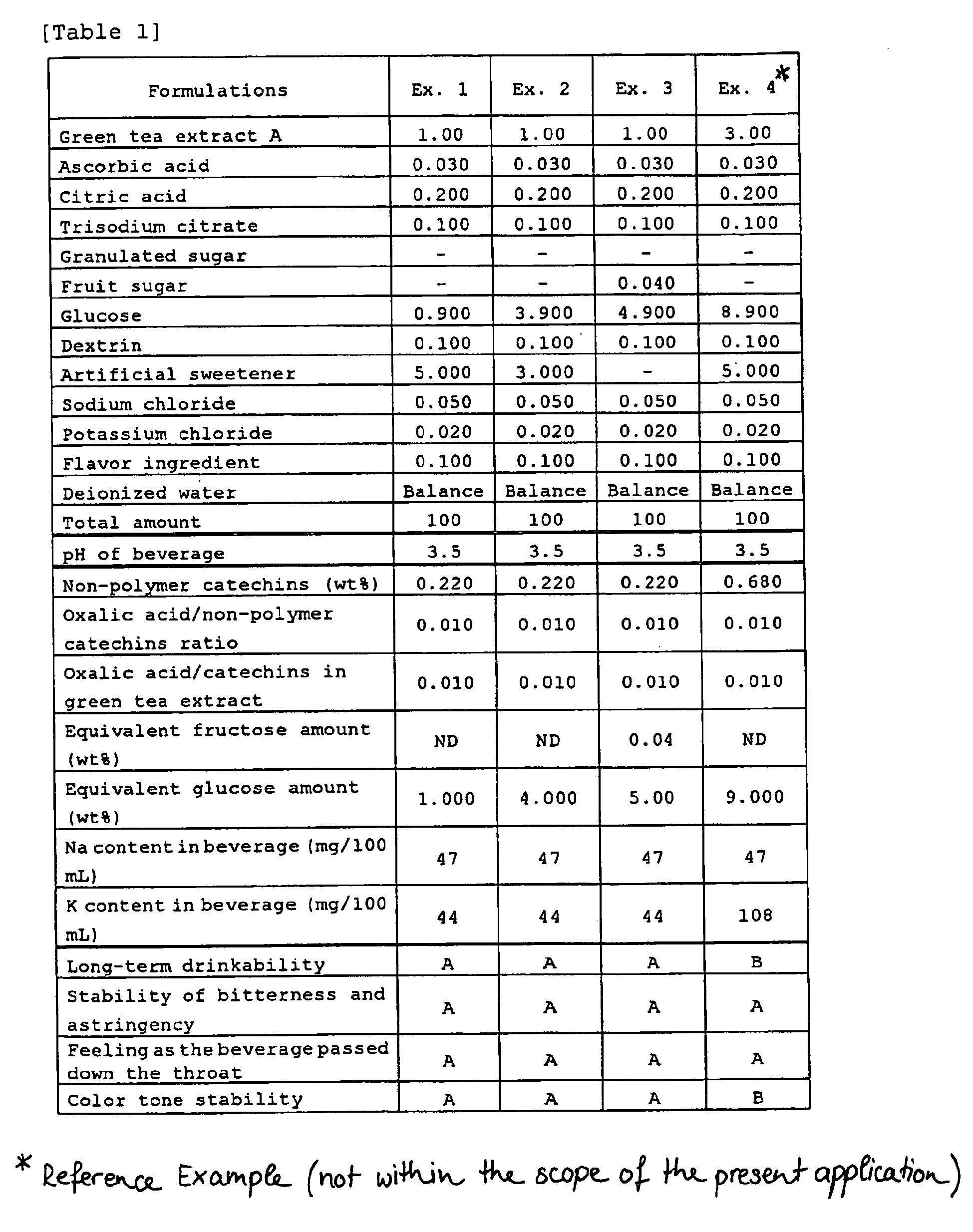

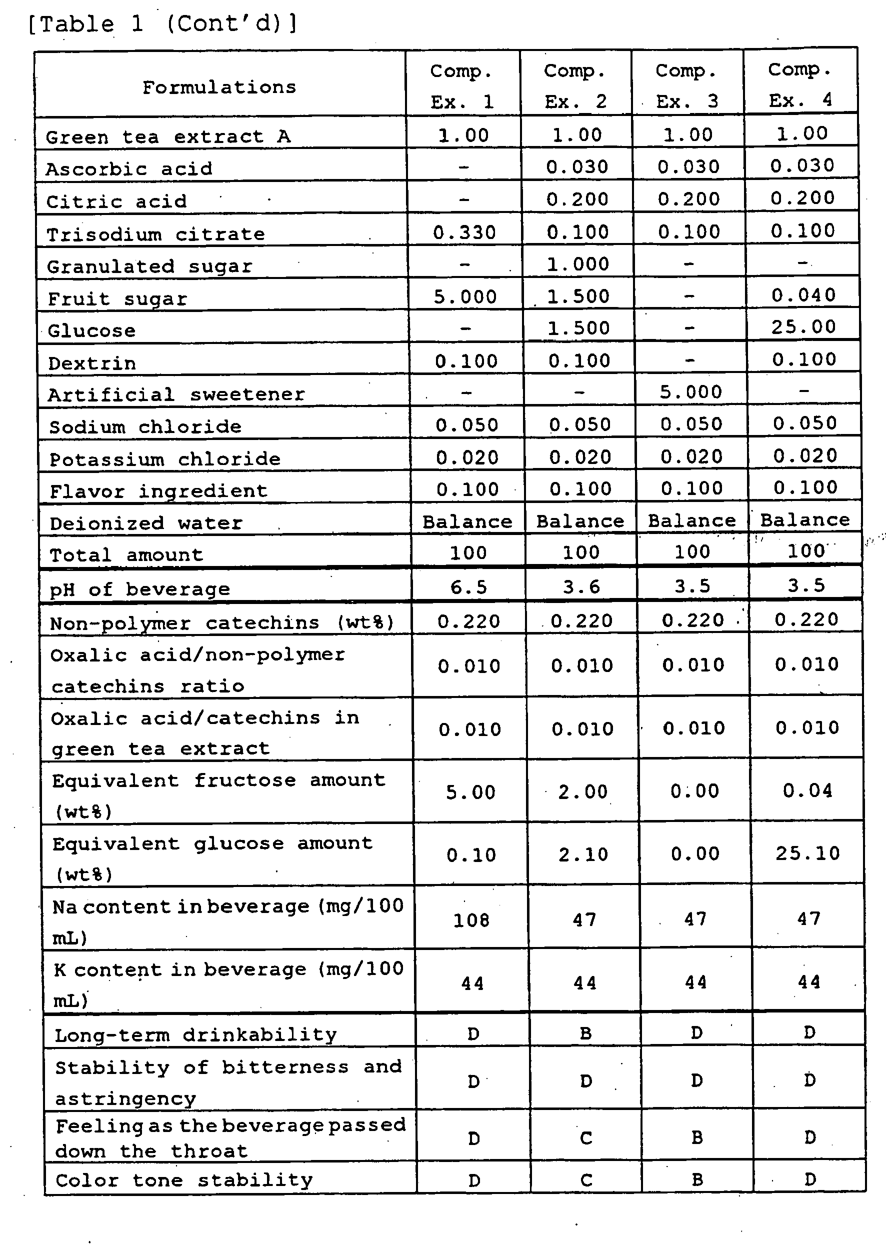

### (*1) Purified product A of green tea extract

"POLYPHENON HG" (100 g, product of Tokyo Food Techno Co., Ltd.) was suspended as a concentrate of green tea extract in a 95% aqueous solution of ethanol (490.9 g) at room temperature under a stirring condition of 250 r/min. After activated carbon "KURARAY COAL GLC" (20 g, product of Kuraray Chemical K.K.) and acid clay "MIZKAACE #600" (35 g, product of Mizusawa Chemical Industries, Ltd.) were poured, the resulting mixture was continuously stirred for about 10 minutes. Subsequent to the dropwise addition of a 40% aqueous solution of ethanol (409.1 g) over 10 minutes, stirring was continued for about 30 minutes still at room temperature. After the activated carbon and a precipitate were filtered off by No. 2 filter paper, the filtrate was filtered again through a 0.2 µm membrane filter. Finally, deionizedwater (200 g) was added to the filtrate, and ethanol was distilled off at 40°C and 0.0272 kg/cm² to obtain the product.
After the treatment, the content of non-polymer catechins was 22 wt%.
The weight ratio of oxalic acid to non-polymer catechins after the treatment = 0.01

### <Production process of the packaged beverages of Examples 1-4 and Comparative Examples 1-4>

In accordance with each typical sport drink formulation shown in Table 1, the individual ingredients were mixed together, and deionized water was then added to bring the total volume to 100 mL so that a mixed solution was prepared. Based on the Food Sanitation Act, sterilization and hot-pack filling were conducted to produce a packaged beverage. Ingredient data of the beverage are also shown. An assessment was performed as to whether or not each beverage had a taste reduced in bitterness and astringency and suited for long-term drinking as intended in the present invention. Thirty male monitors were used. Those monitors were instructed to continuously ingest the beverages as much as 500 mL per day for 1 month, respectively, and after the continued one-month drinking, to give ranking scores to their assessments of the beverages in accordance with the following standards. The packaged beverages stored in a refrigerator were used in the test.

- A:: Suited
- B:: Suited a little
- C:: A little difficult to drink
- D:: Not suited for drinking

The stability of bitterness and astringency was assessed using 30 male monitors. Those monitors were instructed to ingest the beverages as much as 500 mL once per beverage, respectively, both shortly after the production of the beverages and after their storage at 55°C for 7 days, and were then instructed to give ranking scores to their assessments of the thus-stored beverages relative to the beverages shortly after the production in accordance with the following standards.

- A:: Not changed
- B:: Slightly changed
- C:: Changed
- D:: Substantially changed

The feelings as the beverages passed down the throat were assessed using 30 male monitors. Those monitors were instructed to ingest the beverages, respectively, once per beverage as much as they wanted and were then instructed to give ranking scores in accordance with the following standards.
Feeling as each beverage passed down the throat
- A:: Good
- B:: A little better
- C:: A little poorer
- D:: Poor
Concerning the color tone stability of each beverage, the beverage produced and filled in a clear PET bottle of 500-mL capacity was stored at 55°C for 1 month. Trained ten assessors were instructed to visually give ranking scores to a change in the color tone of the beverage during its storage in accordance with the following standards.
- A:: Not changed
- B:: Slightly changed
- C:: Changed
- D:: Substantially changed

Both of the sports drink (Comparative Example 1), which used the green tea extract A and had a pH outside the range, and the sports drink (Comparative Example 2), which used the green tea extract A and had a sweetener composition outside the range, were strong in bitterness and were assessed to be poor in long-term drinkability and aftertaste disappearance. On the other hand, the sports drinks of the present invention (Examples 1-4), which used the green tea extract A, were free of the flavor and taste of green tea or any other foreign taste or foreign flavor and were reduced in bitterness and astringency. They were packaged beverages having the advantages of the present invention, that is, were reduced in bitterness and astringency and were suited for long-term drinking, were excellent in the stability of bitterness and astringency and their feelings as they passed down the throat, hardly changed in their external appearances when stored at high temperatures, and remained stable in color tone over a long term even when filled and stored in clear containers.

## Claims

1. A packaged beverage with a green tea extract mixed therein, comprising the following ingredients (A) and (B) :
(A) from 0.01 to 1.0 wt% of non-polymer catechins, and
(B) from 0.0001 to 8 wt%, in terms of equivalent glucose amount, and less than 0.05 wt%, in terms of equivalent fructose amount, of a carbohydrate,
from 0.001 to 0.5 wt% of sodium ions and from 0.001 to 0.2 wt% of potassium ions,
wherein said beverage has a pH of from 2 to 6.

2. The packaged beverage according to claim 1, wherein said carbohydrate is selected from a monosaccharide, disaccharide, oligosaccharide or conjugated polysaccharide, or a mixture thereof.

3. The packaged beverage according to claim 1 or 2, wherein said beverage is a carbonated beverage, a beverage with fruit extract, juice with vegetable extract, near water, sport drink or diet drink.

4. The packaged beverage according to any one of claims 1-3, which has a pH of from 2 to 5.

5. The packaged beverage according any one of claims 1-4, further comprising oxalic acid or a salt thereof, a content weight ratio of (C) said oxalic acid or salt thereof to (A) said non-polymer catechins (A), [(C)/(A)], being not greater than 0.2.

6. The packaged beverage according to claim 5, wherein said content weight ratio [(C)/(A)] of said oxalic acid or salt thereof (C) to said non-polymer catechins (A) is not greater than 0.05.

7. The packaged beverage according to any one of claims 1-6, which is filled in a clear container.

8. Method of preparing a packaged beverage as defined in any one of claims 1-7, wherein a green tea extract is used as a raw material which is obtained by adjusting a concentrate of green tea extract, said concentrate comprising from 20 to 90 wt% of non-polymer catechins based on a solid content thereof, such that a content weight ratio of oxalic acid or a salt thereof (C) to said non-polymer catechins (A), [(C) / (A)], becomes not greater than 0.2.

## Patentansprüche

1. Abgepacktes Getränk mit einem darin vermischten Grünteeextrakt, umfassend die folgenden Bestandteile (A) und (B):
(A) von 0,01 bis 1,0 Gew.-% Nichtpolymer-Katechine und
(B) von 0,0001 bis 8 Gew.-%, ausgedrückt als Äquivalent-Glucosemenge, und weniger als 0,05 Gew.-%, ausgedrückt als Äquivalent-Fructosemenge, eines Kohlenhydrates,
von 0,001 bis 0,5 Gew.-% Natriumionen und von 0,001 bis 0,2 Gew.-% Kaliumionen,
worin das Getränk einen pH von 2 bis 6 hat.

2. Abgepacktes Getränk nach Anspruch 1, worin das Kohlenhydrat ausgewählt ist aus einem Monosaccharid, Disaccharid, Oligosaccharid oder konjugierten Polysaccharid oder einer Mischung davon.

3. Abgepacktes Getränk nach Anspruch 1 oder 2, worin das Getränk ein kohlensäurehaltiges Getränk, ein Getränk mit Fruchtextrakt, Fruchtsaft mit Pflanzenextrakt, wasserähnliches Getränk, Sportgetränk oder Diätgetränk ist.

4. Abgepacktes Getränk nach einem der Ansprüche 1 bis 3, das einen pH von 2 bis 5 hat.

5. Abgepacktes Getränk nach einem der Ansprüche 1 bis 4, weiterhin umfassend Oxalsäure oder ein Salz davon, wobei ein Gewichtsverhältnis der (C) Oxalsäure oder des Salzes davon zu den (A) Nichtpolymer-Katechinen (A), [(C)/(A)], nicht größer als 0,2 ist.

6. Abgepacktes Getränk nach Anspruch 5, worin das Gewichtsverhältnis [(C)/(A)] der Oxalsäure oder des Salzes davon (C) zu den Nichtpolymer-Katechinen (A) nicht mehr als 0,05 ist.

7. Abgepacktes Getränk nach einem der Ansprüche 1 bis 6, das in einen klaren Behälter abgefüllt ist.

8. Verfahren zur Herstellung eines abgepackten Getränkes wie in einem der Ansprüche 1 bis 7 definiert, worin ein Grünteeextrakt als Ausgangsmaterial verwendet wird, erhalten durch Einstellen eines Konzentrates eines Grünteeextraktes, wobei das Konzentrat von 20 bis 90 Gew.-% Nichtpolymer-Katechine, bezogen auf einen Feststoffgehalt davon, enthält, so dass das Gewichtsverhältnis von Oxalsäure oder einem Salz davon (C) zu den Nichtpolymer-Katechinen (A) [(C)/(A)] nicht mehr als 0,2 wird.

## Revendications

1. Boisson conditionnée avec un extrait de thé vert mélangé dedans, comprenant les ingrédients (A) et (B) suivantes :
(A) de 0,01 à 1,0% en poids de catéchines non-polymères, et
(B) de 0,0001 à 8% en poids, en termes de quantité d'équivalent glucose, et moins de 0,05% en poids, en termes de quantité d'équivalent fructose, d'un glucide,
de 0,001 à 0,5% en poids d'ions sodium et de 0,001 à 0,2% en poids d'ions potassium,
dans laquelle ladite boisson a un pH de 2 à 6.

2. Boisson conditionnée selon la revendication 1, dans laquelle ledit glucide est choisi parmi un monosaccharide, un disaccharide, un oligosaccharide ou un polysaccharide conjugué, ou un mélange de ceux-ci.

3. Boisson conditionnée selon la revendication 1 ou 2, dans laquelle ladite boisson est une boisson gazeuse, une boisson avec un extrait de fruit, un jus avec un extrait végétal, une eau à valeur ajoutée, une boisson pour sportifs ou une boisson de régime.

4. Boisson conditionnée selon l'une quelconque des revendications 1 à 3, qui a un pH de 2 à 5.

5. Boisson conditionnée selon l'une quelconque des revendications 1 à 4, comprenant en outre de l'acide oxalique ou un sel de celui-ci, un rapport en poids des teneurs de (C) dudit acide oxalique ou dudit sel de celui-ci sur (A) lesdites catéchines non-polymères (A), [(C)/(A)], n'étant pas supérieur à 0,2.

6. Boisson conditionnée selon la revendication 5, dans laquelle ledit rapport en poids des teneurs [(C)/(A)] dudit acide oxalique ou dudit sel de celui-ci (C) sur lesdites catéchines non-polymères (A) n'est pas supérieur à 0,05.

7. Boisson conditionnée selon l'une quelconque des revendications 1 à 6, qui est remplie dans un récipient transparent.

8. Procédé de préparation d'une boisson conditionnée telle que définie selon l'une quelconque des revendications 1 à 7, dans lequel un extrait de thé vert est utilisé comme matière première lequel est obtenu en ajustant un concentré d'extrait de thé vert, ledit concentré comprenant de 20 à 90% en poids de catéchines non-polymères sur la base d'une teneur en matières solides de celui-ci, de sorte qu'un rapport en poids des teneurs de l'acide oxalique ou d'un sel de celui-ci (C) sur lesdites catéchines non-polymères (A), [(C)/(A)], ne devient pas supérieur à 0,2.
